# EUROPÄISCHE PATENTSCHRIFT

(11) **EP 1 797 764 B1**
(45) Veröffentlichungstag und Bekanntmachung des Hinweises auf die Patenterteilung: **05.12.2012**
(21) Anmeldenummer: 07007000.8
(22) Anmeldetag: 21.06.2005
(51) Int. Cl.: A22C 11/02, A22C 13/00

(54) **Vorrichtung zum Herstellen von Folienschlauch aus einem Folienband**
Apparatus for manufacturing a tubular film from a film tape
Dispositif de fabrication d'une feuille tubulaire à partir d'un film en bande

(30) Priorität: 02.07.2004 DE 102004032183
(43) Veröffentlichungstag der Anmeldung: 20.06.2007
(62) Teilanmeldung aus: 05013358.6
(73) Patentinhaber: Poly-clip System GmbH & Co. KG, 65795 Hattersheim (DE)
(72) Erfinder: Nikoley, Wolfgang, 55252 Mainz Kastell (DE); Frey, Edmund, 35435 Wettenberg (DE); Hanten, Jürgen, 61231 Bad Nauheim (DE)
(74) Vertreter: Eisenführ, Speiser & Partner

(56) Entgegenhaltungen:
- EP-A- 1 095 570
- EP-A1- 0 744 130
- EP-A1- 0 908 103
- DE-A1- 3 608 983
- DE-A1-102004 024 419
- DE-U1- 9 400 771

## Beschreibung

Die Erfindung betrifft eine Vorrichtung zum Herstellen von mit flüssigem, viskosem oder granulärem Füllgut befüllbarem Folienschlauch aus einem Folienband mit einem an eine Füllmaschine anschließbaren Füllrohr, einer das Füllrohr umgebenden Umformeinrichtung zum Umformen des Folienbandes zu einem Folienschlauch, einer in Füllausstoßrichtung hinter der Umformeinrichtung angeordneten Siegeleinrichtung zum Versiegeln von nach der Umformung benachbarten Längskanten des Folienbandes, um einen Folienschlauch zu bilden, und einem Vorschubantrieb für den Folienschlauch.

Die gattungsbildende EP 0 908 103 A1 beschreibt eine Vorrichtung sowie ein Verfahren zum Herstellen und Befüllen einer schlauchförmigen Verpackung. Ein von einem Vorrat abgezogenes Folienband wird dabei mittels einer Formschulter um ein Füllrohr herumgebogen. Eine Schweißeinrichtung verschweißt die sich überlappenden Längskanten des Folienbandes, wodurch eine schlauchförmige Verpackungshülle entsteht. Stromabwärts der Schweißeinrichtung ist ein Vorschub angeordnet, der die entstehende Verpackungshülle in Füllausstoßrichtung transportiert und dabei weiteres Folienband vom Vorrat abzieht.

Das deutsche Gebrauchsmuster 94 00 771 offenbart eine Vorrichtung zum Verschließen von gefüllten Verpackungshüllen. Auf ein Füllrohr ist ein Druckmarken aufweisender, geraffter Darm aufgezogen. Beim Abziehen des Darms während des Befüllens wird dieser über einen auf dem Füllrohr aufgebrachten Klemmring gezogen, wobei der Darm entrafft wird. Ein auf den Klemmring von außen unter Federspannung aufsetzendes Tastorgan erfasst dabei die Druckmarkierungen und steuert den Verschließvorgang.

Es ist bekannt, die für die Produktion von Würsten oder ähnlichen Portionspackungen benötigte Schlauchhülle an Ort und Stelle durch Längsnahtversiegein eines in Schlauchform umgeformten Folienbandes kontinuierlich oder intermittierend mittels einer solchen Vorrichtung herzustellen. Unter Siegeln ist hierbei jede Art des (unlösbaren) Verbindens der beiden Längskanten zu verstehen, worunter beispielsweise das Schweißen als bevorzugtes Siegelverfahren aber auch das Kleben oder dgl. fällt. Bei dem aus der EP 0 908 103 A1 bekannten gattungsbildenden Verfahren wird das Folienband von dem im Bereich oder in Transport- bzw. Füllstoßausrichtung hinter der Siegeleinrichtung angeordneten Vorschubantrieb über eine entsprechenden Umformeinrichtung (Formschulter) und durch die Siegel- oder Schweißeinrichtung gezogen. Die Formschulter umgibt das Füllrohr und formt das Folienband um das Füllrohr herum der Gestalt um, dass dessen Längskanten entweder auf Stoß oder überlappend aneinander angrenzen. Diese Längskanten werden in der sich anschließenden Schweiß- bzw. Siegelvorrichtung direkt oder mittels eines die Kanten verbindenden Siegelbandes miteinander verbunden.

Der auf diese Weise gebildete Folienschlauch wird von den Vorschubantrieben weiter in Füllausstoßrichtung in einen Pufferabschnitt auf dem Füllrohr gefördert, in der er sich harmonikaartig zu einem Vorrat faltet. Ein Vorrat ist notwendig, da der Abfüllvorgang intermittierend und der Siegelvorgang in den meisten Fällen kontinuierlich, in einigen Fällen auch intermittierend, jedenfalls aber langsamer als das durch den Füllausstoß während des Abfüllvorgangs bedingte Abziehen des Folienschlauches von dem Füllrohr erfolgt. Andererseits entstehen nach dem Abfüllen während des Verschließens der Enden des befüllten Folienschlauches mittels einer sog. Clipmaschine Pausen. Daher wird der Folienschlauch auch während der Clippausen (Füllerstillstand), in denen der Abfüllvorgang angehalten ist, weiterproduziert. Der Folienschlauchvorrat staut sich dabei vor einem Rückhaltemittel an.

Um eine Synchronisation zwischen der Folienschlauchherstellung und dem Abfüllvorgang zu erzielen, wird die Folienschlauchherstellung bekanntermaßen geregelt. Dazu kommt eine Messeinrichtung zum Bestimmen einer Vorratsmenge des Folienschlauch zum Einsatz, die typischerweise aus einem gegenüber dem Füllrohr beweglichen und einem ortsfesten Sensorelement besteht. Das bewegliche Sensorelement ist mit einem in den Querschnitt des gefalteten oder gerafften Folienschlauches eingreifenden Mitnehmer verbunden, der zugleich das Rückhaltemittel für den Folienschlauchvorrat bildet. Wird der Vorrat vergrößert, so verschiebt dieser den Mitnehmer und das bewegliche Sensorelement in Förderrichtung der Vorschubantriebe gegen eine Rückstellkraft, die beispielsweise von einer Feder (Federkraft) oder einem pneumatischen Element (Druckkraft) aufgebracht wird. Wird Folienschlauch von dem Vorrat abgezogen und dieser somit verkleinert, dann treibt die Rückstellkraft den Mitnehmer mit dem beweglichen Sensorelement gegen die Förderrichtung zurück.

In der einfachsten Ausgestaltung der Messeinrichtung weist das feste Sensorelement beispielsweise zwei beabstandete mechanische oder magnetische Schalter oder Signalgeber auf, die jeweils bei Annäherung des beweglichen Sensorelements (mechanische oder berührungslose Kontaktfläche) betätigt werden. Die Schalter lösen dabei ein Ab- bzw. Einschalten der Vorrichtung bei einer durch eine entsprechende Relativanordnung der Schalter/Signalgeber und Kontaktflächen ausgewählten, voreingestellten maximalen bzw. minimalen Vorratsmenge aus.

Eine weiterentwickelte Messeinrichtung sieht eine Wegmessung zwischen dem beweglichen und dem ortsfesten Sensorelement vor, deren Resultat eine differenziertere Anpassung der Siegel- und Fördergeschwindigkeit an die Vorratsmenge erlaubt.

In jedem Fall aber wird das bewegliche Sensorelement durch den in den Querschnitt des gerafften Folienschlauches eingreifenden Mitnehmer transportiert. Dies setzt jeweils eine ausreichende Faltung des Vorrats voraus, an der der Mitnehmer angreift. Nun gibt es jedoch Folien mit Beschichtungen, welche durch starke Faltungen Schaden nehmen. Beispielweise sind Folien mit einer Aluminiumbeschichtung empfindlich gegen scharfe Knicke, da die relativ spröde Aluminiumschicht an solchen Stellen reißen kann, wodurch sowohl die funktionalen als auch die ästhetischen Eigenschaften der Folie beeinträchtigt werden. Dasselbe gilt für steife Folienmaterialien, die nach scharfen Umformungen nicht mehr vollständig geglättet werden können und somit eine irreversible, unerwünscht wellige Struktur beibehalten. Ferner tritt das Problem auf, dass die Falten der nach dem Versiegeln noch heißen Folie bei zu großem Staudruck während der Vorratsbildung aneinander klebt.

Aufgabe der vorliegenden Erfindung ist es, eine Vorrichtung zum Herstellen von Folienschlauch aus einem Folienband zu schaffen, die diese Nachteile überwindet.

Diese Aufgabe wird durch eine Vorrichtung mit den Merkmalen des Anspruchs 1 gelöst. Die Messeinrichtung umfasst einen ersten Sensor, der die Länge des von der Siegeleinrichtung an den Folienschlauchvorrat abgegebenen Folienschlauches erfasst, und einen zweiten Sensor, der die Länge des von dem Folienschlauchvorrat in Füllausstoßrichtung abgezogenen Folienschlauches erfasst.

Der Folienschlauchvorrat bildet sich abhängig vom Folienmaterial typischerweise aufgrund mangelnder Eigenstabilität unter Faltenbildung direkt hinter den Vorschubantrieben. Es kann aufgrund der erfindungsgemäßen Messeinrichtung jedoch eine starke Faltenbildung vermieden werden, weil bei der Bestimmung des Folienschlauchvorrats auf den Eingriff eines mit Rückstellkraft gegen die Vorschubrichtungen wirkenden Mitnehmers verzichtet wird. Die Bestimmung des Vorrats ist überdies präziser, da dieser nicht mehr über die (zufällige) Faltung bei der Vorratsbildung sondern durch Längenmessung und Differenzbildung mittels geeigneter Signalverarbeitungsmittel zwischen der Länge des dem Folienschlauchvorrat zugeführten und des von diesem abgezogenen Folienschlauches ermittelt wird. Hierdurch kann mittels einer geeigneten Regelung die Siegel- und Fördergeschwindigkeit noch genauer an die jeweiligen Bedingungen (Abfüllgeschwindigkeit, -takt und dgl.) angepasst werden, was wiederum eine konstantere und letztendlich auch geringere Vorratshaltung ermöglicht und damit weiter zur Vermeidung von starker Faltung des Folienschlauches beiträgt. Weil es bei der erfindungsgemäßen Vorrichtung gerade nicht auf die Stärke der Faltung ankommt, kann diese unter Berücksichtigung der Empfindlichkeit des Folienmaterials und der für den einwandfreien Abfüllbetrieb benötigten minimalen Vorratsmenge bei vorgegebener Länge der Pufferstrecke durch eine exakte Einstellung der Regelung verringert werden. Während bei den bekannten Messeinrichtungen die Vorratsmenge in Abhängigkeit von der Steifheit der Folie variieren konnte, so dass bei Folienwechsel jeweils eine genaue Einstellung der Messeinrichtung zu erfolgen hatte, kann mit der erfindungsgemäßen Vorrichtung unabhängig von dem verwendeten Folienmaterial und ohne weitere Einstellmaßnahmen stets eine gleichbleibende Vorratsmenge und damit ein prozesssicherer Herstellungsund Abfüllvorgang gewährleistet werden.

In einer besonders bevorzugten Ausführungsform ist auf dem Füllrohr in Füllausstoßrichtung hinter dem Vorschubantrieb ein Rückhaltering angeordnet und so eingerichtet, dass der zwischen dem Vorschubantrieb und dem Rückhaltering aufgestaute Folienschlauchvorrat beim Abziehen des Folienschlauches in Füllausstoßrichtung zurückgehalten wird.

Der Rückhaltering hat typischerweise einen Außendurchmesser, der so an den Innendurchmesser des fertigen Folienschlauches angepasst ist, dass dieser aufgrund mangelnder Eigenstabilität zwar nicht von dem Vorschubantrieb über den Rückhaltering hinweggeschoben, jedoch beim Abfüllvorgang bedingt durch den Füllausstoß über den Rückhaltering von dem Puffervorrat abgezogen werden kann. Insbesondere wird dabei der Folienschlauchvorrat aufgrund seines undefinierten Innendurchmessers zurückgehalten oder aus anderer Sicht der Folienschlauch beim Abziehen über den Rückhaltering gestreckt. Bei der Anpassung des Außendurchmessers spielen verschiedene Faktoren wie Reibungskoeffizienten zwischen dem Folien- und dem Rückhalteringmaterial, Elastizität der Folie und des Rückhalterings und dgl. eine Rolle. Der Rückhaltering lässt sich bei Bedarf auf einfache Weise auswechseln. Insbesondere lässt sich der Rückhaltering auch auf einfache Weise auf dem zylindrischen Füllrohr verschieben und arretieren, wodurch die Länge der Pufferstrecke verändert werden kann.

Der erste Sensor kann in Füllausstoßrichtung in Höhe des Rückhaltering oder dahinter angeordnet sein, da an der Stelle des Rückhaltering und dahinter die Folie durch das Abziehen von dem Vorrat wieder gestreckt ist. Bevorzugt ist der erste Sensor jedoch in Höhe des Rückhalterings angeordnet. Dies hat insbesondere bei Verwendung eines an dem Folienschlauch anliegenden Sensors den Vorteil, dass der Rückhaltering zugleich als Gegendruckstück dient.

Sowohl der erste als auch der zweite Sensor der Messeinrichtung kann auf verschiedene Weise realisiert werden.

Gemäß einer weiteren vorteilhaften Ausgestaltung weist der zweite und/oder erste Sensor eine in Füllausstoßrichtung vor bzw. hinter dem Folienschlauchvorrat an dem Folienschlauch bzw. dem Folienband anliegende Rolle und einen Drehzahlaufnehmer auf, der eingerichtet ist die Drehung der jeweils anliegenden Rolle zu erfassen. Diese Form des Wegaufnehmers - nachfolgend auch als Zählrad bezeichnet - zeichnet sich durch ihre konstruktive Einfachheit und geringe Kosten aus.

Der erste Sensor weist in weiteren vorteilhaften Ausführungsformen einen Drehzahlaufnehmer auf, der eingerichtet ist, die Drehung entweder einer das Folienband bevorratenden oder einer dieses umlenkenden Rolle zu erfassen. Streng genommen wird nicht die Länge des an den Folienschlauchvorrat abgegebenen Folienschlauchs sondern die des von dem Folienbandrollenvorrat abgezogenen Folienbands gemessen. Dies erfolgt durch Aufnahme der Drehzahl bzw. Winkelstellung der Umlenkrolle mit bekanntem Umfang oder der Drehzahl bzw. Winkelstellung der Vorratsrolle und anschließende Berechnung unter Berücksichtigung des Umfangs - in letzterem Fall unter Berücksichtigung eines sich verändernden Umfangs.

Bevorzugt weist der erste Sensor einen Drehzahlaufnehmer auf, der eingerichtet ist, einen Vorschubweg des Vorschubantriebs zu erfassen. In diesem Fall findet eine Messung der Drehzahl bzw. Winkelstellung des Vorschubantriebs statt, welcher bekanntermaßen ein im Bereich des Füllrohres an dem bereits umgeformten Folienschlauch reibschlüssig anliegendes, angetriebenes Transportband oder eine Transportrolle aufweist. Für den Antrieb des Transportbands/der Transportrolle werden üblicherweise Schrittmotoren verwendet. Der Drehzahlaufnehmer bzw. der erste Sensor wird daher vorzugsweise durch elektronische Signalverarbeitungsmittel realisiert, die die Impulse der Schrittmotorsteuerung abgreifen und bei bekanntem Umfang des Antriebsbandes bzw. der Antriebsrolle in den Vorschubweg umrechnen.

Während bei den vorgenannten Ausführungsbeispielen das Folienband bzw. der Folienschlauch unter direktem Kontakt mit dem Sensor oder eines den Sensor einschließenden Transportmittels für das Folienband bzw. den Folienschlauch (Vorrats-, Umlenk- oder Antriebsrolle) abgetastet wird, ist der zweite und/oder erste Sensor in einem anderen vorteilhaften Ausführungsbeispiel in Füllausstoßrichtung vor bzw. hinter dem Folienschlauchvorrat, benachbart zu dem Folienschlauch bzw. dem Folienband angeordnet und eingerichtet, Strukturen auf der Oberfläche des Folienbandes oder Folienschlauches berührungsfrei abzutasten.

Solche Strukturen sind bei einigen Folien beispielweise in Form eines Gewebes oder dgl. originär vorhanden. Andernfalls können speziell für den Verwendungszweck der Längenmessung aufgeprägt oder aufgedruckt sein. Das Aufdrucken oder -prägen kann "in-line" parallel zum Siegeln erfolgen. Als Sensor bietet sich bevorzugt ein optischer Sensor (beispielsweise eine CCD-Kamera oder ein Laserabtastsensor) an. Alternativ kann auch ein akustischer Sensor verwendet werden. Solche berührungsfreien Sensoren haben allgemein den Vorteil, dass kein Schlupf zwischen dem Sensor bzw. Transportmittel und dem Folienband bzw. dem Folienschlauch auftreten kann.

Weitere Aufgaben, Merkmale und Vorteile der vorliegenden Erfindung werden nun anhand der im Folgenden beschriebenen Ausführungsbeispielen unter Bezugnahme auf die zugehörigen Figuren beschrieben. Es zeigen:
- Fig. 1: schematische Darstellung eines Ausführungsbeispiel der erfindungsgemäßen Vorrichtung zum Herstellen von Folienschlauch in der Seitenansicht und
- Fig. 2: das Ausführungsbeispiel gemäß Fig. 1 in der Draufsicht.

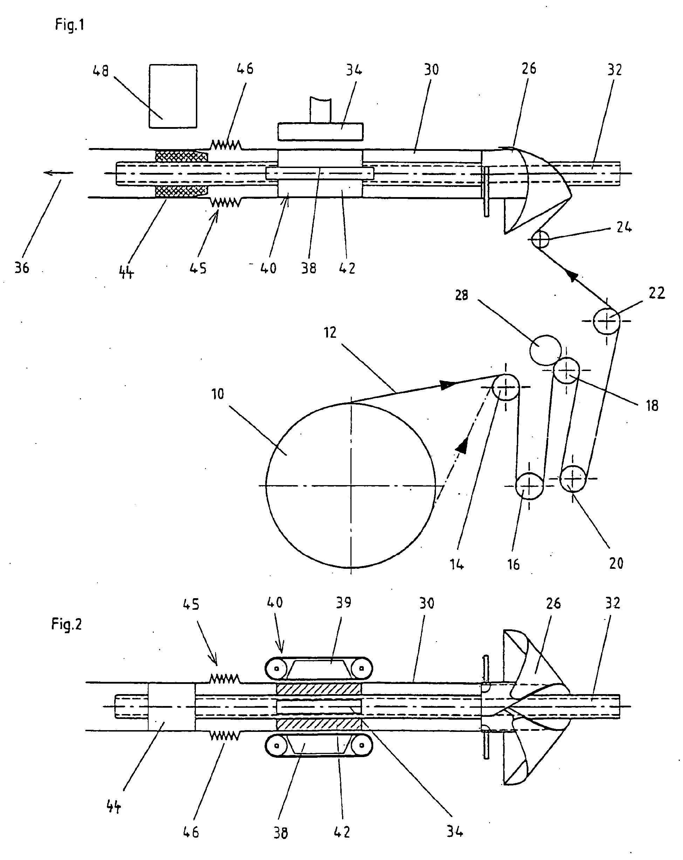

Die Vorrichtung gemäß Fig. 1 weist eine Vorratsrolle 10 eines zur Verarbeitung anstehenden Folienbandes 12 auf. Das Folienband 12 wird über mehrere Umlenkrollen 14, 16, 18, 20, 22 und 24 an eine Formschulter 26 herangeführt. Im Bereich einer der Umlenkrollen 18 liegt eine Zählrad 28 auf der der Umlenkrolle 18 gegenüberliegenden Oberfläche an dem Folienband 12 an. Die Umlenkrolle 18 bildet also die Andruckrolle für das Zählrad 28.

Das Folienband wird in der Formschulter 26 zu einem Folienschlauch 30 um ein Füllrohr 32 herum umgeformt. Dabei umgibt der Folienschlauch 30 das Füllrohr 32 im Wesentlichen koaxial. Der Folienschlauch weist nach der Umformung zwei, gemäß der Ansicht in Fig. 1 oben liegende, jedoch nicht dargestellte, benachbarte Längskanten auf, die in einer der Formschulter 26 in Füllausstoßrichtung (vgl. Pfeil 36) stromabwärts angeordneten Siegelstation 34 versiegelt bzw. verschweißt werden. In gleicher Höhe mit der Siegelstation 34 befindet sich beiderseits des Füllrohres jeweils ein auf der Außenseite des Folienschlauchs 30 anliegender Antriebsriemen 38, 39 eines Vorschubantriebs 40, der Folienband nachund unter Siegelstation hindurchzieht und gleichzeitig den fertigen Folienschlauch in Füllausstoßrichtung 36 schiebt. Im Bereich der Siegelstation 34 und des Vorschubantriebs 40 ist koaxial auf dem Füllrohr 32 ein Ring 42 angeordnet, dessen Außendurchmesser in etwa dem Durchmesser des fertigen Folienschlauchs 30 entspricht. Unter Andruck gegen diesen Ring 42 wirken sowohl die Antriebsriemen 38, 39 als auch Siegelstation 34 (genauer ein Siegelbalken, Siegelband oder Heißluftstrom der Siegelstation).

Stromabwärts der Siegelstation 34 befindet sich koaxial auf dem Füllrohr 32 ein Rückhaltering 44. Da der Vorschubantrieb 40 in Vorschubrichtung vor dem Rückhaltering 44 wirkt und der Folienschlauch keine ausreichende Eigenstabilität aufweist, bildet sich ein ziehharmonikaartig gefalteter Folienschlauchvorrat 46 auf einer Pufferstrecke 45 zwischen dem Rückhaltering 44 und dem Vorschubantrieb 40. Weil es bei der erfindungsgemäßen Vorrichtung jedoch nicht auf die Stärke der Faltung ankommt, kann diese beispielsweise unter Berücksichtigung der Empfindlichkeit des Folienmaterials durch eine entsprechende Wahl der Länge der Pufferstrecke 45 bei gleicher Vorratskapazität oder bei vorgegebener Länge der Pufferstrecke 45 durch eine Reduzierung der Vorratsmenge verringert werden.

Der Folienschlauch 30 wird dann beim Abfüllvorgang in Füllausstoßrichtung 36 über den Rückhaltering von dem Puffervorrat abgezogen. In Höhe des Rückhalterings 44 oder in Füllausstoßrichtung 36 dahinter, d.h. an der Stelle, an der die Folie durch das Abziehen von dem Vorrat 46 wieder gestreckt ist, befindet sich ein erster Sensor 48 der Messeinrichtung. Dieser Sensor 48 kann ebenfalls wie der zweite Sensor 28 als ein an der Außenseite des Folienschlauches beispielsweise im Bereich des Rückhalterings 44 als Gegendruckstück anliegendes Zählrad ausgestaltet sein.

Nachfolgend wird das Herstellungsverfahren von mit flüssigem, viskosem oder granulärem Füllgut befüllbarem Folienschlauch aus einem Folienband mittels der erfindungsgemäßen Vorrichtung beschrieben. In einem ersten Schritt wird das Folienband 12 von einem Folienbandvorrat 10 der Umformeinrichtung 26 zugeführt. Das Folienband 12 wird in der Umformeinrichtung 26 zu einem Folienschlauch 30 um ein Füllrohr 32 herum umgeformt und danach in einer Schweißoder Siegeleinrichtung 34 der nach der Umformung überlappenden oder nebeneinanderliegenden Längskanten mit oder ohne Verwendung eines zusätzlichen Siegelstreifens zu dem geschlossenen Folienschlauch 30 verschweißt oder versiegelt. Der versiegelte Folienschlauch 30 wird danach mittels eines Vorschubantriebs 40 von der Siegeleinrichtung 34 an einen Folienschlauchvorrat 46 auf dem Füllrohr 32 abgegeben, von dem er durch den Füllvorgang bedingt bei Bedarf wieder abgezogen wird, wobei die Länge des an den Folienschlauchvorrat 46 abgegebenen und die Länge des von dem Folienschlauchvorrat 46 abgezogenen Folienschlauchs 30 erfasst und einer (elektronischen) Regelung zugeführt wird, die den Siegelvorgang bzw. die Siegelgeschwindigkeit so regelt, dass eine vorbestimmte, möglichst gleichbleibende Vorratsmenge an Folienschlauch bereitgehalten wird.

Bei Betriebsbeginn oder Folienbandwechsel muss zunächst eine bestimmte Menge Folienschlauch vorgesiegelt werden, damit ein einwandfreier Anlauf der Gesamtanlage (Siegelvorrichtung und Clipmaschine) gewährleistet ist. Diese bestimmte Menge kann dann durch die erfindungsgemäße Messung und Regelung der Siegelgeschwindigkeit beibehalten werden.

## Patentansprüche

1. Vorrichtung zum Herstellen von mit flüssigem, viskosem oder granulärem Füllgut befüllbaren Folienschlauch aus einem Folienband (12), mit einem an eine Füllmaschine für das Füllgut anschließbaren Füllrohr (32), einer das Füllrohr (32) umgebenden Umformeinrichtung (26) zum Umformen des Folienbandes (12) zu einem Folienschlauch (30), einer in Füllausstoßrichtung (36) hinter der Umformeinrichtung (26) angeordneten Siegeleinrichtung (34) zum Versiegeln von nach der Umformung benachbarten Längskanten des Folienbandes (12), um einen Folienschlauch (30) zu bilden, und mit einem Vorschubantrieb (40) für den Folienschlauch (30),
**dadurch gekennzeichnet, dass** in Füllausstoßrichtung (36) nach der Umformeinrichtung (26) eine erste Leseeinrichtung (48) zum Lesen von auf dem Folienschlauch (30) befindlichen Druckmarkierungen vorgesehen ist und dass in Füllausstoßrichtung (36) vor der Umformeinrichtung (26) eine zweite Leseeinrichtung (28) zum Lesen von auf dem Folienband (12) vorgesehenen Druckmarkierungen angeordnet ist.

2. Vorrichtung nach Anspruch 1,
**dadurch gekennzeichnet, dass** in Füllausstoßrichtung (36) vor der Umformeinrichtung (26) eine Schreibeinrichtung zum Aufbringen von durch zumindest die erste Leseeinrichtung (28) lesbaren Druckmarkierungen vorgesehen ist.

3. System aus einer Vorrichtung nach einem der Ansprüche 1 und 2 sowie einem Folien band zum Herstellen von mit flüssigem, viskosem oder granulärem Füllgut befüllbaren Folienschlauch, wobei das Folienband (12) mit durch eine Leseeinrichtung (28, 48) lesbaren Druckmarkierungen versehen ist.

## Claims

1. Device for manufacturing film tubing, which is fillable with liquid, viscous or granular filler, out of film strip (12), with a filling pipe (32) connectable to a filling machine for the filler, a forming device (26) enclosing the filling pipe (32) for forming the film strip (12) into film tubing (30), a sealing device (34) arranged behind the forming device (26) in the filler discharge direction (36)for sealing longitudinal edges of the film strip (12) that are adjacent after formingin order to form film tubing (30) and with a feed drive (40) for the film tubing (30),
**characterised in that** a first reading device (48) for reading printed markings located on the film tubing (30) is provided after the forming device (26) in the filling discharge direction (36) and that a second reading device (28) for reading printed markings on the film strip (12) is provided before the forming device (26) in the filler discharge direction (36).

2. Device in accordance with Claim 1
**characterised in that** a printing device for applying printed markings that can be read by at least the first reading device (28) is provided before the forming device (26) in the filler discharge direction (36)

3. System consisting of a device in accordance with either of Claims 1 or 2 and a film strip for manufacturing film tubing fillable with liquid, viscous or granular filler, the film strip (12) being provided with printed markings that can be read by a reading device (28, 48)

## Revendications

1. Installation de fabrication d'une feuille tubulaire pouvant être remplie de produit de chargement liquide visqueux ou granulaire à partir d'un ruban (12) en feuille, comprenant un tube (32) de remplissage pouvant être raccordé à une machine de remplissage pour le produit de remplissage, un dispositif (26) de transformation entourant le tube (32) de remplissage pour transformer le ruban (12) en feuille en un tube (30) en feuille, un dispositif (34) de scellement disposé dans la direction (36) d'expulsion de remplissage derrière le dispositif (26) de transformation pour le scellement de bords longitudinaux voisins après la transformation du ruban (12) en feuille afin de former un tube (30) en feuille et un entraînement (40) d'avance du tube (30) en feuille, **caractérisée en ce qu'**il est prévu après, dans la direction (36) d'expulsion de remplissage, le dispositif (26) de transformation, un premier dispositif (48) de lecture pour la lecture de repérages imprimés se trouvant sur le tube (30) en feuille et **en ce qu'**avant, dans la direction (36) d'expulsion de remplissage, le dispositif (26) de transformation, un deuxième dispositif (28) de lecture est monté pour la lecture de repérages imprimés prévus sur le ruban (12) en feuille.

2. Installation suivant la revendication 1,
**caractérisée en ce qu'**avant, dans la direction (36) d'expulsion de remplissage, le dispositif (36) de transformation, est prévu un dispositif d'écriture pour l'apposition de repérages imprimés pouvant être lus par au moins le premier dispositif (28) de lecture.

3. Système composé d'une installation suivant l'une des revendications 1 et 2, ainsi que d'un ruban en feuille pour la production de tubes en feuille pouvant être remplis de produit de remplissage liquide, visqueux ou granulaire, le ruban (12) en feuille étant muni de marquages imprimés pouvant être lus par un dispositif (28, 48) de lecture.
